# EUROPÄISCHE PATENTANMELDUNG

(11) **EP 2 192 349 A2**
(43) Veröffentlichungstag der Anmeldung: **02.06.2010**
(21) Anmeldenummer: 09013638.3
(22) Anmeldetag: 29.10.2009
(51) Int. Cl.: F24C 1/02

(54) **Kochfeld zum Anordnen über einem Wärmeerzeuger**

(30) Priorität: 01.12.2008 DE 102008059789
(71) Anmelder: Wamsler Haus- und Küchentechnik GmbH, 85748 Garching bei München (DE)
(72) Erfinder: Beck, Arne, 85625 Glonn (DE); Einhellig, Reinhold, 81739 München (DE)
(74) Vertreter: Schmid, Nils T.F.

(57) **Zusammenfassung**

Bei einem Kochfeld zum Anordnen über einem Wärmeerzeuger, wie einer Brennkammer (5), von dem Wärme über das Kochfeld (1) an zu erwärmende Lebensmittel übertragen wird, umfassend eine im Wesentlichen horizontale Trägerplatte (3), die eine dem Wärmeerzeuger zuzuwendende Unterseite (15), eine dem Lebensmittel zuzuwendende Oberseite (13) und wenigstens eine Aussparung (7,9) aufweist, ist vorgesehen, dass eine von der Trägerplatte (3) strukturell separate Kochplatte (21) aus Glaskeramik, deren Unterseite (15) für einen Wärmeübertrag an die Oberseite (13) der Wärme des Wärmeerzeugers ausgesetzt ist, in wenigstens einer der wenigstens einen Aussparung (7,9) angeordnet ist.

## Beschreibung

Die Erfindung betrifft ein Kochfeld insbesondere für einen Herd, der beispielsweise in Küchen eingesetzt werden kann. Das Kochfeld soll über einem Wärmeerzeuger angeordnet werden. Der Wärmeerzeuger kann auf verschiedenen physikalischen Erwärmungsprinzipien basieren, wie das Verbrennen von Brennstoffen, wie Holz oder Gas, etc., die Elektrostrahlungsbeheizung, die Halogenstrahlungsbeheizung oder die Induktionsbeheizung.

Bei Küchenherden zeigte sich ein Trend, dass eine Energieersorgung für den Wärmeerzeuger des Herdes auch von elektrischem Strom unabhängig sichergestellt sein soll. Insofern finden Herde mit einer Brennkammer zum Verfeuern von Holz oder Kohle für den Einsatz auch in modernen High-Tech-Küchen immer häufiger Anwendung. Bei einem Herd unter anderem mit einer Brennkammer als Wärmeerzeuger zeigte sich eine homogene Wärmeerzeugungsverteilung frei von Hitzespitzen, die geeignet zum Garen und Kochen von Lebensmitteln ist.

Es ist Aufgabe der Erfindung, ein Kochfeld zum Anordnen über einen Wärmeerzeuger, wie einer Brennkammer, dahingehend zu verbessern, dass der Wärmeübertrag von dem Wärmeerzeuger durch das Kochfeld optimiert ist.

Diese Aufgabe wird durch die Merkmale von Anspruch 1 gelöst. Danach ist ein Kochfeld zum Anordnen über einem Wärmeerzeuger, wie einer Brennkammer, vorgesehen, von welchem Wärmeerzeuger Wärme über das Kochfeld an zu erwärmende Lebensmittel übertragen wird. Das erfindungsgemäße Kochfeld umfasst eine im Wesentlichen horizontale Trägerplatte, die eine dem Wärmeerzeuger zuzuwendende Unterseite, eine Oberseite, auf der das Lebensmittel zubereitet werden soll, indem beispielsweise Kochutensilien, Kochtöpfe oder Pfannen eingesetzt werden, und wenigstens eine Aussparung für eine Kochplatte aufweist. Die Aussparung erstreckt sich durch die Trägerplatte, so dass ein direkter Zugriff von außerhalb des Kochfeldes auf den Wärmeerzeuger beispielsweise in die Brennkammer zugelassen ist.

Erfindungsgemäß ist in wenigstens einer der wenigstens einen Aussparung eine von der Trägerplatte strukturell separate Kochplatte aus Glaskeramik angeordnet oder eingelegt. Die Unterseite der Glaskeramikkochplatte ist für einen Wärmeübertrag an die Oberseite der Kochplatte des Wärmeerzeugers ausgesetzt. Die Trägerplatte wird üblicherweise von der Herdrahmenstruktur getragen und trägt selbst die Glaskeramikkochplatte und gegebenenfalls weitere Kochplatten insbesondere aus Glaskeramik.

Mit der erfindungsgemäßen Maßnahme des Einsatzes einer strukturell von der Trägerplatte separaten Glaskeramikkochplatte wird ein verbesserter und lokal konzentrierter Wärmeübertrag von dem Wärmeerzeuger in einem vordefiniert begrenzten Kochbereich der Kochplatte erreicht, so dass kürzere Aufheizzeiten zum Kochen von Lebensmitteln erreicht werden. Der konzentrierte Wärmeübertrag auf die Kochplatte zur Bildung eines Hitzespotts wird überraschenderweise aufgrund der strukturellen Separierung der Glaskeramikkochplatte von der Trägerplatte erreicht. Nicht nur, dass die besonders günstigen Eigenschaften einer Glaskeramik, hohe Wärmestrahlungsdurchlässigkeit und geringe Wärmeausdehnung, für die Kochplatte genutzt werde, ist der durch die Separierung der Kochplatte von der Trägerplatte entstehende Spalt zwischen dem Trägerplattenrand und Kochplattenrand, welcher bei kreisrunden Kochplatten kreisringförmig umläuft, eine Wärmedichtung aufgrund einer Strukturunterbrechung geschaffen, durch die ein seitliches Ableiten von vom Wärmeerzeuger stammende Wärme in die Trägerstruktur bei der Wärmedurchleitung durch die Glaskeramikkochplatte stark einschränkt. Somit kann durch die Erfindung eine erhabene Wärmekonzentration in den Umfangsgrenzen der Glaskeramikkochplatte realisiert werden. Auch bei Brennkammerherden wird aufgrund der oben genannten Eigenschaft ein konzentrierter Wärmeübertrag durch die Glaskeramikkochplatte realisiert, ohne dass große Wärmemengen an die für ein Kochen nicht vorgesehene Trägerplatte abgeleitet werden.

Bei einer bevorzugten Ausführung der Erfindung ist die Kochplatte lose in der wenigstens einen Aussparung eingesetzt. Auf diese Weise wird einerseits ein relativ großer Spalt zwischen der Trägerplatte und der Kochplatte gebildet, wodurch die Wärmeübertragungsunterbrechung verstärkt ist, zum anderen kann auf diese Weise das erfindungsgemäße Kochfeld einfach gereinigt werden, indem die der Wärme ausgesetzte Glaskeramikkochplatte, sobald sie abgekühlt ist, einfach von der Trägerplatte entfernt wird und reinigend behandelt werden kann. Zusätzlich kann durch das lose Einsetzen der Glaskeramikkochplatte ein einfacher Zugriff auf den Wärmeerzeuger beispielsweise in die Brennkammer erreicht werden.

Bei einer Weiterbildung der Erfindung ist die Aussparung durch einen umlaufenden, insbesondere vertikalen, Innenrand begrenzt, der einem umlaufenden, insbesondere vertikalen Außenrand der montierten oder angeordneten Kochplatte gegenüberliegt, wobei der Innen- und Außenrand größtenteils, insbesondere im Wesentlichen vollständig, berührungslos unter Ausbildung eines Luftspalts in einem Abstand zueinander angeordnet sind. Unter einer Vertikalrichtung ist die Richtung zu verstehen, die lotrecht zur Horizontalebene ist, in der die Trägerplatte, insbesondere die kochseitige Oberseite der Trägerplatte liegt. Es kann sein, dass die Keramikkochplatte unter Umständen nach dem montagegemäßen Einsetzen an der Trägerplatte an einer einzigen Umfangsstelle einen Kontakt zwischen dem Außenrand der Keramikkochplatte und dem Innenrand der Trägerplatte bildet, allerdings bleibt zumindest der restliche Randbereich berührungslos.

Bei einer bevorzugten Ausführung der Erfindung sind Abmessungen der Kochplatte und der Aussparung derart aufeinander abgestimmt, dass der Abstand kleiner oder gleich weniger Millimeter, insbesondere kleiner als 1, 2 oder 3 mm, ist. Dabei kann die Glaskeramikkochplatte eine Kreisscheibe mit einer üblichen Durchmesserdimension für Kochplatten sein. Vorzugsweise sind der Innenrand der Aussparung der Trägerplatte und der Außenrand der Glaskeramikkochplatte kreisförmig und liegen in einem optimalen Montagezustand konzentrisch zueinander. Auf diese Weise bildet sich ein ringförmiger Luftspalt gleichmäßiger Breite längs dessen umfänglichen Verlauf.

Bei einer bevorzugten Ausführung der Erfindung bildet die Trägerplatte einen insbesondere umlaufenden Tragaußenrand, wobei die wenigstens eine Aussparung in einem nicht vernachlässigbaren Abstand zum Tragaußenrand ausgebildet ist, so dass insbesondere der Tragaußenrand unterbrechungsfrei einen Mittelbereich der Trägerplatte umgibt, indem die wenigstens eine Aussparung ausgebildet ist. Der vorzugsweise rechteckige Tragaußenrand der Trägerplatte dient dazu, das Kochfeld an einem Herdkasten oder einer Freischnittstelle einer Küchenarbeitsplatte aufzunehmen. Mit der erfindungsgemäßen Maßnahme ist sichergestellt, dass die Aussparung stets von Material der Trägerplatte, nämlich des Tragaußenrands, begrenzt ist. Vorzugsweise umgibt der Tragaußenrand die wenigstens eine Aussparung, insbesondere sämtliche Aussparungen, in horizontaler Ebene vollständig.

Bei einer Weiterbildung der Erfindung ist die wenigstens eine Aussparung in der Trägerplatte ausgeschnitten. Dabei wird der Ausschnitt formkomplementär zu der Glaskeramikkochplatte dimensioniert, die zum Einsatz in der Aussparung angedacht ist.

Bei einer bevorzugten Ausführung der Erfindung ist der Innenrand der Aussparung der Trägerplatte stufenförmig geformt, wobei der horizontale Stufenabschnitt als Auflage für die Glaskeramikkochplatte dient.

Bei einer Weiterbildung der Erfindung fluchten eine im Wesentlichen horizontale Kochseite der Kochplatte und die im Wesentlichen horizontale Oberseite der Trägerplatte auf einer gemeinsamen Horizontalebene miteinander flächig.

Bei einer bevorzugten Ausführung der Erfindung hat die Trägerplatte an einem Innenrand der Aussparung eine sich über den Innenrand in die Aussparung erstreckende Auflage zum losen Aufnehmen der Kochplatte darauf. Die Auflage kann, wie oben bereits angedeutet, durch eine stufenförmige Ausbildung des Innenrands der Aussparung gebildet sein. Alternativ kann ein an der Unterseite der Trägerplatte befestigter Ring vorgesehen sein, der sich über den Innenrand der Aussparung radial nach innen erstreckt, um eine frei zugängliche Auflagefläche zu bilden.

Bei einer bevorzugten Weiterbildung der Erfindung liegt die Kochplatte auf einer umlaufenden Dichtung, die insbesondere auf der Auflage angeordnet ist. Dabei kann die Dichtung lose auf der Auflage liegen oder damit beispielsweise unter Verwendung eines Klebstoffs befestigt sein. Auch ist es möglich, die umlaufende Dichtung an der Kochplatte beispielsweise mit Hilfe eines Klebstoffs zu befestigen.

Die umlaufende Dichtung soll einen radialen Luftspalt, der sich zwischen der Kochplatte und der Trägerplatte insbesondere zwischen dem Innenrand der Trägerplatte und dem Außenrand der Glaskeramikkochplatte bildet, abdichten. Auf diese Weise kann ein Brennraum der Brennkammer unterhalb der Trägerplatte und der Kochplatte gegenüber der Atmosphäre oberhalb der Trägerplatte und der Kochplatte abgedichtet werden.

Vorzugsweise ist die Dichtung durch eine Dichtschnur insbesondere aus Glasfasern gebildet. Die Dichtschnur soll in einer Kreisform ausgelegt sein, so dass eine vollständig umlaufende Dichtung gebildet ist.

Vorzugsweise ist die Trägerplatte durch ein von Glaskeramik unterschiedliches Material, wie Metall, gebildet. Auch eine Trägerplatte aus Naturstein ist vorstellbar. Insbesondere bei dem Einsetzen der Brennkammer als Wärmeerzeuger, in der Holz oder Kohle verbrannt wird, zeigte sich eine Metall- oder Steinträgerplatte als insofern besonders vorteilhaft, als damit eine hohe Wärmekapazität für die Trägerstruktur bereitgestellt wird. Ist zum Beispiel ein Kochvorgang, bei dem eine hohe Wärmekonzentration auf der Glaskeramikkochplatte bereitgestellt wurde, beendet, kann beispielsweise der Kochtopf auf der noch länger warmen Trägerplatte stehen bleiben, ohne dass es zu Anbackungen und Verbrennungen an Lebensmitteln kommt, aber ein längeres Warmhalten der zubereiteten Lebensmittel erreicht ist. Es sei klar, dass die Trägerplatte auch aus Glaskeramik bestehen kann.

Bei einer bevorzugten Ausführung der Erfindung ist an der Unterseite der Trägerplatte eine Isolierschicht angeordnet, die im Wesentlichen im Bereich der wenigstens einen Aussparung einen oder mehrere Durchgänge für ein lokal konzentriertes direktes Zuleiten von Wärme des Wärmeerzeugers an die Unterseite der Glaskeramikkochplatte aufweist. Beispielsweise ist die Isolierschicht aus Vermiculite gebildet. Im Allgemeinen soll die Isolierschicht aus einem Mineralmaterial gebildet sein, wobei ein Aluminium-Eisen-Magnesium-Silikat bevorzugt ist. Dieses Material hat besonders hohe isoliertechnische Eigenschaften bei einem geringen Gewicht. Zudem kennzeichnet sich das Material durch eine hohe Feuerbeständigkeit aus und ist umweltfreundlich recyclebar. Die Isolierschicht hat die Aufgabe, dass die Wärme des Wärmeerzeugers beispielsweise in der Brennkammer nicht der Trägerplatte zugeführt wird, sondern konzentriert der Glaskeramikkochplatte.

Bei einer bevorzugten Ausführung der Erfindung ist der Wärmeerzeuger durch Verbrennung von Brennstoffen, wie Holz, Gas oder dergleichen, realisiert. Dabei kann eine Unterseite der Kochplatte und insbesondere der Trägerplatte und/oder die Isolierschicht Direktwärme, insbesondere Flammen, des Wärmeerzeugers ausgesetzt sein.

Weitere Eigenschaften, Vorteile und Merkmale der Erfindung werden durch die folgende Beschreibung einer bevorzugten Ausführung der Erfindung anhand der beiliegenden Zeichnungen deutlich, in denen zeigen:
- Figur 1: eine Querschnittsteilansicht eines erfindungsgemäßen Herdes im Bereich des oben liegenden Kochfeldes; und
- Figur 2: eine Querschnittsdetailteilansicht des Abschnitts II gemäß Figur 1.

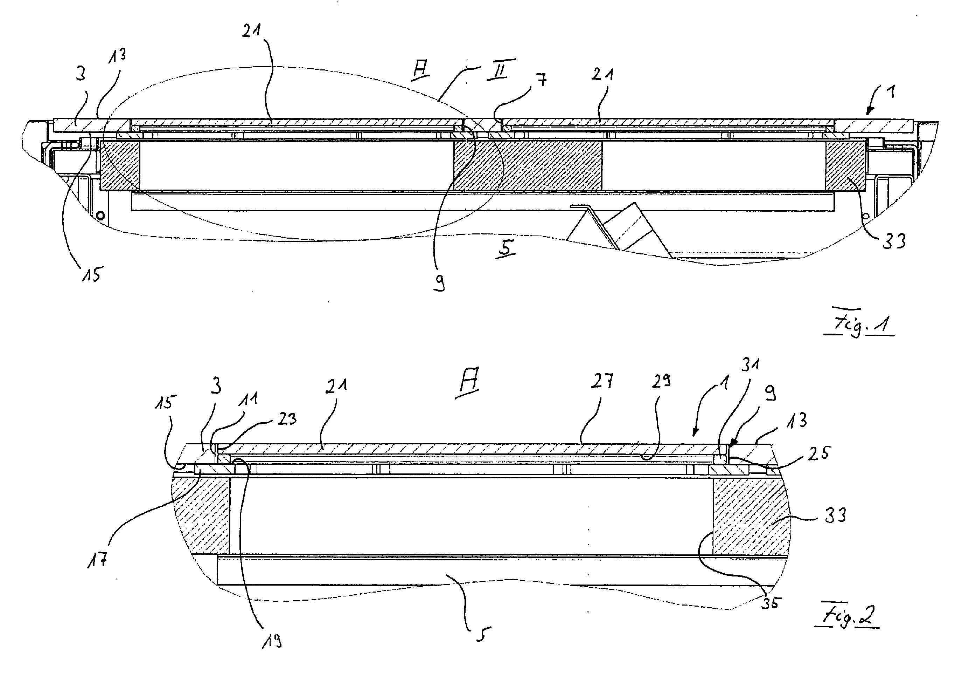

In den Figuren 1 und 2 ist ein erfindungsgemäßer Festbrennstoffherd teilweise im Schnitt dargestellt. Der Herd hat ein erfindungsgemäßes Kochfeld, das im Allgemeinen mit der Bezugsziffer 1 versehen ist.

Das erfindungsgemäße Kochfeld 1 besteht im Wesentlichen aus einer Trägerplatte 3, die beispielsweise aus Metall gebildet ist. Die Trägerplatte 3 ist oberhalb eines Brennraums 5 eines Holzofens angeordnet. Der Festbrennstoffherd besteht aus einer nicht näher dargestellten seitlichen Zugangstür, über die Festbrennstoff, wie Holz und/oder Kohle, beschickt werden kann. Der Festbrennstoffherd ist weiterhin mit einem Rauchabsaugsystem versehen, das in den Figuren 1 und 2 nicht näher dargestellt ist. Auf die Funktionsweise des Festbrennstoffherds oder anderer Wärmeerzeuger wird im Folgenden nicht näher eingegangen. Diese werden als bekannt vorausgesetzt.

Die Trägerplatte 3 hat mehrere Aussparungen 7, 9, wobei lediglich zwei in Figur 1 dargestellt sind. Es sind allerdings auch vier, fünf oder sechs Aussparungen in einem erfindungsgemäßen Kochfeld 1 realisierbar. Die Aussparungen 7, 9 haben eine kreisrunde Form und werden durch einen vertikalen Innenrand 11 begrenzt, der zylindrisch ist.

Die Trägerplatte 3 definiert eine horizontale Oberseite 13 und eine horizontale Unterseite 15, an der ein Aufnahmering 17 befestigt ist. Der Aufnahmering 17 umfasst einen ersten Abschnitt für die Befestigung an der Unterseite 15 der Trägerplatte 3 und einen zweiten Abschnitt, der sich radial über den Innenrand 11 in das Innere der Aussparung 9 derart erstreckt, dass eine horizontale Auflagefläche 19 gebildet ist. Die horizontale Auflagefläche 19 fluchtet in einer gemeinsamen horizontalen Ebene mit der Unterseite 15 der Trägerplatte 3. Der Aufnahmering 17 kann als umlaufender Ring ausgebildet sein oder durch mehrere Ringabschnitte. Eine umläufige Ringplatte ist allerdings aufgrund einer kontinuierlichen Auflagefläche von Vorteil.

Auf dem Aufnahmering 17 ist eine Glaskeramikkochplatte 21 lose angeordnet, die im Wesentlichen formkomplementär zur Aussparung 9 ausgebildet ist. Die kreisscheibenförmige Glaskeramikkochplatte 21 definiert einen Außenrand 23 und hat im horizontalen Verlauf eine konstante Stärke. Wie in Figur 2 ersichtlich ist, ist ein Luftspalt 25 zwischen dem vertikalen Außenrand 23 und der Glaskeramikkochplatte 21 und dem vertikalen Innenrand 11 der Trägerplatte 3 gebildet, der als eine Wärmeübertragung unterbrechende Thermodichtung zwischen der Trägerplatte 3 und der Glaskeramikkochplatte 21 dient.

Wie in Figur 2 ebenfalls ersichtlich ist, hat die Glaskeramikkochplatte 21 eine Kochseite 27, die mit der Oberseite 13 in einer gemeinsamen Horizontalebene fluchtend liegt. Auf diese Weise wird keine Vertikalstufe zwischen der Trägerplatte 3 und der Glaskeramikkochplatte 21 gebildet, so dass ein widerstandfreies Verschieben eines Kochtopfs von der Glaskeramikkochplatte 21 auf die Trägerplatte 3 und zurück ermöglicht ist.

Wie oben beschrieben ist, liegt die Glaskeramikkochplatte 21 lose in der Aussparung 9, so dass eine einfache Montage und Demontage und damit ein ergonomisch einfacher Zugriff ohne Lösen von Befestigungsmittel in den Brennraum möglich ist.

Um den Brennraum 5 gegenüber Atmosphäre A abzudichten, ist zwischen der Unterseite 29 der Glaskeramikkochplatte 21 und der Auflagefläche 19 des Aufnahmerings 17 eine kreisförmig umlaufende Dichtschnur 31 aus Glasfasern vorgesehen. Die Dichtschnur 31 kann entweder an der Unterseite 29 der Glaskeramikkochplatte 21 oder an der Auflagefläche 19 des Aufnahmerings 17 befestigt sein.

Unterhalb der Unterseite 15 der Trägerplatte 3 sowie unterhalb des Aufnahmerings 17 und der Glaskeramikkochplatte 21 ist eine Isolierschicht 33 vorzugsweise aus Vermiculite gebildet, das Durchgänge 35 aufweist, so dass die Unterseite 29 der Glaskeramikkochplatte 21 direkt der Brennkammer 5 ausgesetzt ist. Die Isolierschicht 33 dient dazu, dass ein Übertrag der Wärme, insbesondere Wärmestrahlung, der Brennkammer 5 in die Trägerplatte 3 weitestgehend vermieden wird und vielmehr eine lokal konzentrierte Durchleitung der Wärme durch die Glaskeramikkochplatte 21 geschieht.

Wie insbesondere in Figur 1 ersichtlich, ist die Isolierschicht 33 deutlich breiter als die Trägerplatte 3. Die Durchgänge 35 können derart dimensioniert sein, dass sie nur teilweise die Glaskeramikkochplatte 21 freigeben.

Vorzugsweise ist die Glaskeramikkochplatte aus dem Material gebildet, das auf dem Markt unter der Markenbezeichnung Ceran^{®} bekannt ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Kochfeld
- 3: Trägerplatte
- 5: Brennraum
- 7, 9: Aussparungen
- 11: vertikaler Innenrand
- 13: horizontale Oberseite
- 15: horizontale Unterseite
- 17: Aufnahmering
- 19: horizontale Auflageplatte
- 21: Glaskeramikkochplatte
- 23: Außenrand
- 25: Luftspalt
- 27: Kochseite
- 29: Unterseite
- 31: Ringschnur
- 33: Isolierschicht
- 35: Durchgänge
- A: Atmosphäre

## Patentansprüche

1. Kochfeld zum Anordnen über einem Wärmeerzeuger, wie einer Brennkammer (5), von dem Wärme über das Kochfeld (1) an zu erwärmende Lebensmittel übertragen wird, umfassend eine im Wesentlichen horizontale Trägerplatte (3), die eine dem Wärmeerzeuger zuzuwendende Unterseite (15), eine dem Lebensmittel zuzuwendende Oberseite (13) und wenigstens eine Aussparung (7, 9) aufweist, **dadurch gekennzeichnet, dass** eine von der Trägerplatte (3) strukturell separate Kochplatte (21) aus Glaskeramik, deren Unterseite (15) für einen Wärmeübertrag an die Oberseite (13) der Wärme des Wärmeerzeugers ausgesetzt ist, in wenigstens einer der wenigstens einen Aussparung (7, 9) angeordnet ist.

2. Kochfeld nach Anspruch 1, **dadurch gekennzeichnet, dass** die Kochplatte (21) lose in der wenigstens einen Aussparung (7, 9) eingesetzt ist.

3. Kochfeld nach Anspruch 1 oder 2, **dadurch gekennzeichnet, dass** die Aussparung (7, 9) durch einen umlaufenden Innenrand (11) begrenzt ist, der einem umlaufenden Außenrand (23) der angeordneten Kochplatte (21) gegenüberliegt, wobei der Innen- und Außenrand (11, 23) größtenteils, insbesondere im Wesentlichen vollständig berührungslos unter Ausbildung eines Luftspalts (25) in einem Abstand zueinander angeordnet sind, wobei insbesondere Abmessungen der Kochplatte (21) und der Aussparung (7, 9) derart aufeinander abgestimmt sind, dass der Abstand kleiner oder gleich weniger Millimeter, insbesondere kleiner als 1, 2 oder 3 mm, ist und/oder wobei insbesondere der Innen- und Außenrand (11, 23) kreisförmig sind.

4. Kochfeld nach einem der vorstehenden Ansprüche, **dadurch gekennzeichnet, dass** die Trägerplatte (3) einen insbesondere umlaufenden Tragaußenrand (23) bildet und die Aussparung (7, 9) in einem nicht vernachlässigbaren Abstand zum Tragaußenrand (23) ausgebildet ist, so dass insbesondere der Tragaußenrand (23) unterbrechungsfrei einen Mittelbereich der Trägerplatte (3) umgibt, in dem die wenigstens eine Aussparung (7, 9) ausgebildet ist, wobei insbesondere der Tragaußenrand (23) die wenigstens eine Aussparung (7, 9), insbesondere sämtliche Aussparungen (7, 9), in horizontaler Ebene vollständig umgibt.

5. Kochfeld nach einem der vorstehenden Ansprüche, **dadurch gekennzeichnet, dass** die Aussparung (7, 9) in der Trägerplatte (3) ausgeschnitten ist.

6. Kochfeld nach einem der vorstehenden Ansprüche, **dadurch gekennzeichnet, dass** eine im Wesentlichen horizontale Kochseite (27) der Kochplatte (21) und die im Wesentlichen horizontale Oberseite (13) der Trägerplatte (3) auf einer gemeinsamen Horizontalebene miteinander flächig fluchten.

7. Kochfeld nach einem der vorstehenden Ansprüche, **dadurch gekennzeichnet, dass** die Trägerplatte (3) an einem Innenrand (11) der Aussparung (7, 9), insbesondere an der Unterseite (15) der Trägerplatte (3) befestigt, eine sich über den Innenrand (11) in die Aussparung (7, 9) erstreckende Auflage zum losen Ablegen der Kochplatte (21) darauf aufweist.

8. Kochfeld nach einem der vorstehenden Ansprüche, **dadurch gekennzeichnet, dass** die Kochplatte (21) auf einer umlaufenden Dichtung aufliegt, die insbesondere auf der Auflage angeordnet ist, so dass ein radialer Luftspalt (25) zwischen der Kochplatte (21) und der Trägerplatte (3), insbesondere der Brennraum (5) der Brennkammer unterhalb der Trägerplatte (3) und der Kochplatte (21), gegenüber Atmosphäre (A) oberhalb der Trägerplatte (3) und der Kochplatte (21), im Wesentlichen abgedichtet ist.

9. Kochfeld nach Anspruch 8, **dadurch gekennzeichnet, dass** die Dichtung durch eine Dichtschnur (31) insbesondere aus Glasfaser gebildet ist.

10. Kochfeld nach einem der vorstehenden Ansprüche, **dadurch gekennzeichnet, dass** die Trägerplatte (3) durch ein von Glaskeramik unterschiedliches Material, wie Metall, gebildet ist.

11. Kochfeld nach einem der Ansprüche 1 bis 9, **dadurch gekennzeichnet, dass** auch die Trägerplatte (3) aus Glaskeramik besteht.

12. Kochfeld nach einem der vorstehenden Ansprüche, **dadurch gekennzeichnet, dass** an der Unterseite der Trägerplatte (3) eine Isolierschicht (33) angeordnet ist, die im Wesentlichen im Bereich der wenigstens einen Aussparung (7, 9) einen oder mehrere Durchgänge (35) zum konzentrierten direkten Zuleiten von Wärme des Wärmeerzeugers hin zur Unterseite (15) der Kochplatte (21) aufweist.

13. Kochfeld nach Anspruch 12, **dadurch gekennzeichnet, dass** die Isolierschicht (33) aus Vermiculite gebildet ist.

14. Kochfeld nach einem der vorstehenden Ansprüche, **dadurch gekennzeichnet, dass** der Wärmeerzeuger durch Verbrennung von Brennstoffen, wie Holz, Gas oder dergleichen, realisiert ist.

15. Kochfeld nach einem der vorstehenden Ansprüche, **dadurch gekennzeichnet, dass** eine Unterseite (15) der Kochplatte (21) und insbesondere die Trägerplatte (3) und/oder die Isolierschicht (33) direkt Wärme, insbesondere Flammen, des Wärmeerzeugers ausgesetzt sind.
